# EUROPEAN PATENT APPLICATION

(11) **EP 1 811 593 A1**
(43) Date of publication of application: **25.07.2007**
(21) Application number: 05785540.5
(22) Date of filing: 20.09.2005
(51) Int. Cl.: H01M 4/06, H01M 4/52, H01M 4/62

(54) **ALKALINE BATTERY**

(30) Priority: 15.10.2004 JP 2004301153; 08.12.2004 JP 2004355690
(71) Applicant: MATSUSHITA ELECTRIC INDUSTRIAL CO., LTD., Osaka 571-8501 (JP)
(72) Inventor: KATO, Fumio c/o Matsushita Electric Coltd, Shiromi1-chome, Chuo-ku,Osaka-shi Osaka 540-6319 (JP); SAWADA, Katsuya Matsushita ElectricIndustCo,Ltd, Shiromi 1-chome ,Chuo-ku,Osaka-shi Osaka 540-6319 (JP); OKADA, Tadaya Matsushita Electric Co.Ltd, Shiromi 1-chome ,Chuo-ku,Osaka-shi Osaka 540-6319 (JP); MUKAI, YasuoMatsushita ElectricIndustrial Co,Ltd, Chuo-ku,Osaka-shi Osaka 540-6319 (JP); NOYA, Shigeto Matsushita Electric indus Co Ltd, Chuo-ku ,Osaka -shi Osaka 540-6319 (JP)
(74) Representative: TBK-Patent
(86) International application number: PCT/JP2005/017261
(87) International publication number: WO 2006/040907

(57) **Abstract**

An alkaline battery includes a positive electrode mixture, a negative electrode, and a separator interposed between the positive electrode mixture and the negative electrode. The positive electrode mixture contains a nickel oxyhydroxide, manganese dioxide and a conductive agent. (1) The nickel oxyhydroxide includes at least manganese dissolved therein, and the manganese accounts for 0.5 to 10 % by mole of the total amount of metal elements contained in the nickel oxyhydroxide. (2) The nickel oxyhydroxide mainly has a β-type crystal structure. (3) The nickel oxyhydroxide has a volume-basis mean particle size of 8 to 15 µm. The use of this positive electrode mixture makes it possible to heighten the capacity of the alkaline battery and improve its storage characteristics. Also, the above-mentioned properties of the nickel oxyhydroxide including manganese enable a significant improvement in the productivity of the nickel oxyhydroxide.

## Description

### Technical Field

The present invention relates to an alkaline battery having a positive electrode mixture that contains a nickel oxyhydroxide and manganese dioxide as active materials.

### Background Art

Alkaline batteries, such as alkaline manganese dry batteries, have an inside-out structure in which a cylindrical positive electrode mixture pellet made of manganese dioxide is placed in a positive electrode case serving as the positive electrode terminal, so as to closely adhere to the positive electrode case, and a gel zinc negative electrode is placed in the hollow cavity of the pellet, with a separator interposed therebetween. With the recent proliferation of digital devices, the load electric power of such battery-powered devices has been gradually increasing. Thus, there is a demand for batteries having excellent high-loaded discharge performance. For example, mixing nickel oxyhydroxide into the positive electrode mixture has been proposed in order to improve high-loaded discharge characteristics (see Patent Document 1). Such batteries have recently been commercialized and widely used.

The nickel oxyhydroxide used in such alkaline batteries is produced, for example, by oxidizing spherical or egg-like nickel hydroxide that has been used in alkaline storage batteries by an oxidizing agent, such as an aqueous solution of sodium hypochlorite (see Patent Document 2).
The spherical nickel hydroxide used as the raw material is of a β-type having a high bulk density (or tap density). This is treated with an oxidizing agent, whereby it is converted into spherical nickel oxyhydroxide mainly having a β-type crystal structure. The use of such nickel oxyhydroxide can provide a high-density positive electrode. As a result, it becomes possible to heighten battery capacity.

Meanwhile, alkaline batteries with nickel oxyhydroxide mixed into the positive electrode mixture have a problem in that their storage performance is poor in comparison with alkaline batteries without nickel oxyhydroxide. Particularly when they are stored at high temperatures, the self-discharge of the positive electrode may increase. This self-discharge reaction consists of a reduction reaction of nickel oxyhydroxide represented by the formula (1) and an oxidation decomposition reaction of hydroxide ions represented by the formula (2), and the overall reaction is represented by the formula (3).

NiOOH + H₂O + e⁻ → Ni(OH)₂+ OH⁻ (1)

40H⁻ → 2H₂O + O₂ + 4e⁻ (2)

4NiOOH + 2H₂O → 4Ni(OH)₂ + O₂ (3)

Therefore, in order for the battery to maintain its high-loaded discharge characteristics after storage, the self-discharge reaction as represented by the formula (3) needs to be suppressed to avoid the deterioration of the nickel oxyhydroxide.

For example, in order to suppress the self-discharge reaction, the use of a solid solution nickel oxyhydroxide including a small amount of zinc has been proposed (see Patent Document 3). In such a solid solution nickel oxyhydroxide including zinc, the oxygen-generating overvoltage at the surface thereof becomes high, thereby suppressing the reaction of the formula (2). As a result, the storage performance of even the alkaline batteries with a nickel oxyhydroxide mixed into the positive electrode mixture can be improved to some extent.

As similar techniques, the use of a solid solution nickel oxyhydroxide containing small amounts of zinc and cobalt (see Patent Document 4) and the use of a solid solution nickel oxyhydroxide containing a small amount of an alkaline earth metal (e.g., calcium) (see Patent Document 5) have been proposed.

Also, in order to reduce the self-discharge of the battery, it has been proposed to immerse nickel oxyhydroxide, after the production thereof, in an alkaline aqueous solution such that alkaline cations are forcedly contained between the layers of the nickel oxyhydroxide crystal (see Patent Document 6).
Patent Document 1: Japanese Laid-Open Patent Publication No. Sho 57-72266
Patent Document 2: Japanese Examined Patent Publication No. Hei 4-80513
Patent Document 3: Japanese Laid-Open Patent Publication No. 2002-75354
Patent Document 4: Japanese Laid-Open Patent Publication No. 2002-203546
Patent Document 5: Japanese Laid-Open Patent Publication No. 2002-289187
Patent Document 6: Japanese Laid-Open Patent Publication No. 2001-325954

### Disclosure of the Invention

### Problem That the Invention Is to Solve

However, the use of the above-mentioned solid solution nickel oxyhydroxides dissolving or containing small amounts of metal elements such as zinc, cobalt, and alkaline earth metal causes the following problems.

### 1) A solid solution nickel oxyhydroxide including zinc

A solid solution nickel oxyhydroxide including zinc is prepared by treating a solid solution nickel hydroxide including zinc with an oxidizing agent. The zinc included in the nickel hydroxide has the effect of suppressing the oxidation of nickel, as is widely known in the field of alkaline storage batteries. Thus, the nickel hydroxide including zinc is resistant to oxidation by an oxidizing agent, so that unreacted nickel hydroxide is likely to remain in the nickel oxyhydroxide. Hence, in order to fully oxidize the nickel hydroxide including zinc, it is necessary to add a quite excessive oxidizing agent and apply a long-time treatment thereto. It is therefore difficult to produce a nickel oxyhydroxide including zinc with good productivity.

### 2) A solid solution nickel oxyhydroxide including cobalt or a solid solution nickel oxyhydroxide including cobalt and zinc

A solid solution nickel oxyhydroxide including cobalt, or cobalt and zinc is prepared by treating a solid solution nickel hydroxide including cobalt, or cobalt and zinc with an oxidizing agent. The cobalt lowers the oxidation reduction potential of nickel and thereby facilitates the oxidation by the oxidizing agent, but it may lower the potential of the nickel oxyhydroxide upon discharge. That is, the discharge characteristics of the resultant battery tend to lower. Also, since cobalt is relatively expensive, there is also another problem in that such nickel oxyhydroxide involves high costs.

### 3) A solid solution nickel oxyhydroxide including an alkaline earth metal

A solid solution nickel oxyhydroxide including an alkaline earth metal is prepared by treating a solid solution nickel hydroxide including an alkaline earth metal with an oxidizing agent. First, in synthesizing a nickel hydroxide including an alkaline earth metal, since most sulfates of alkaline earth metals are water-insoluble, there is a need to use, for example, an aqueous solution of a water-soluble nitrate of an alkaline earth metal. This requires a step of removing nitrate ions and the like, thereby making the operating condition complicated in comparison with the typical synthesis of nickel hydroxide. Further, the alkaline earth metal included in the nickel hydroxide also has the effect of suppressing the oxidation of nickel in the same manner as zinc. Hence, it becomes difficult to heighten the productivity in the oxidation step.

### Means for Solving the Problem

The present invention relates to an alkaline battery including a positive electrode mixture, a negative electrode, and a separator interposed between the positive electrode mixture and the negative electrode. The positive electrode mixture includes a nickel oxyhydroxide, manganese dioxide and a conductive agent. (1) The nickel oxyhydroxide includes at least manganese dissolved therein, and the manganese accounts for 0.5 to 10 % by mole of the total amount of metal elements included in the nickel oxyhydroxide. (2) The nickel oxyhydroxide mainly has a β-type crystal structure. (3) The nickel oxyhydroxide has a volume-basis mean particle size of 8 to 15 µm.

In the alkaline battery, preferably, the nickel oxyhydroxide has at least one of the physical properties of: (4) a nickel mean valence of 2.95 to 3.05; (5) a tap density of 2.15 g/cm³ or more; and (6) a BET specific surface area of 5 to 20 m²/g. As used herein, the tap density refers to the tap density of a nickel oxyhydroxide which has been tapped 300 times.

In the alkaline battery, it is preferred that the nickel oxyhydroxide have sodium ions on the surface thereof, and that the sodium ions account for 0.5 to 1 % by weight of the total of the nickel oxyhydroxide and the sodium ions.

In the alkaline battery, it is preferred that the nickel oxyhydroxide account for 10 to 80 % by weight of the positive electrode mixture.

In the alkaline battery, it is preferred that the conductive agent be graphite, and that the graphite account for 3 to 10 % by weight of the positive electrode mixture.

### Effects of the Invention

The present invention can heighten the capacity of an alkaline battery whose positive electrode mixture includes a nickel oxyhydroxide and manganese dioxide and improve the storage characteristics thereof.
Also, the above-mentioned physical properties of the nickel oxyhydroxide including manganese dissolved therein enable a large increase in the productivity of the nickel oxyhydroxide. Accordingly, an alkaline battery having excellent characteristics such as high-loaded discharge characteristics and reliability can be provided at low costs.

### Brief Description of Drawings

[FIG. 1] a partially sectional front view of an alkaline battery according to one embodiment of the present invention; and
[FIG. 2] a graph showing an X-ray diffraction profile (curved line A) of a nickel hydroxide including Mn in the form of solid solution and an X-ray diffraction profile (curved line B) of a nickel hydroxide containing Mn in the form of eutectic, which are used in an example.

### Best Mode for Carrying Out the Invention

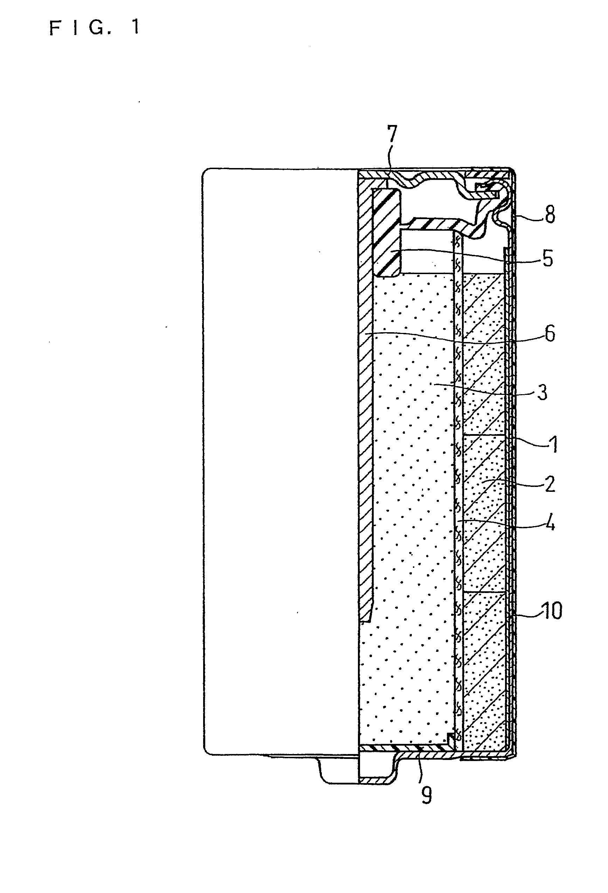

FIG. 1 illustrates an alkaline battery according to one embodiment of the present invention.
This alkaline battery includes a positive electrode mixture 2, a gel negative electrode 3, a separator 4 interposed between the positive electrode mixture 2 and the gel negative electrode 3, an electrolyte (not shown), and a positive electrode case 1 accommodating these components.
The positive electrode case 1 is a cylinder with a bottom, and the bottom has a protruded part which protrudes outward in the center thereof. The protruded part serves as the positive electrode terminal.
The positive electrode mixture 2 in the shape of a hollow cylinder is placed in the positive electrode case 1 so as to come into contact with the positive electrode case 1. A graphite coating film 10 is formed on the inner face of the positive electrode case 1.

The gel negative electrode 3 is placed in the hollow cavity of the positive electrode mixture 2, with the separator 4 interposed therebetween. Also, the gel negative electrode 3 is insulated from the positive electrode case 1 by an insulating cap 9.
A negative electrode current collector 6 is inserted into the gel negative electrode 3. The negative electrode current collector 6 is fitted into the central hole of a resin sealing plate 5. A bottom plate 7 is welded to the upper face of the negative electrode current collector 6. The bottom plate 7 serves as the negative electrode terminal.
The opening of the positive electrode case 1 is sealed by crimping the open edge of the positive electrode case 1 onto the circumference of the bottom plate 7 with the edge of the sealing plate 5 therebetween. The outer surface of the positive electrode case 1 is covered with an outer label 8.

The electrolyte is used to moisten the positive electrode mixture 2 and the separator 4. The electrolyte can be any conventionally known one in the art. An example is an aqueous solution containing 40% by weight of potassium hydroxide.
The gel negative electrode 3 can be any conventionally known one in the art. For example, an exemplary gel negative electrode is one composed of a gelling agent of sodium polyacrylate, an alkaline electrolyte, and a negative electrode active material of zinc powder. It should be noted that the alkaline electrolyte used in the gel negative electrode may be the same as or different from the abovementioned electrolyte.

The positive electrode mixture 2 contains a nickel oxyhydroxide, manganese dioxide and a conductive agent. The nickel oxyhydroxide used in the present invention includes at least manganese dissolved therein, and this manganese accounts for 0.5 to 10 % by mole of the total amount of metal elements contained in the nickel oxyhydroxide. If the amount of manganese is less than 0.5 % by mole, the effect of improving the capacity and storage characteristics may decrease. If the amount of manganese exceeds 10 % by mole, the amount of nickel contained in the nickel oxyhydroxide decreases, so that a sufficient capacity may not be obtained.

The crystal structure of the nickel oxyhydroxide is composed mainly of a high-density β-type crystal structure. At this time, preferably the β-type crystal structure accounts for 90% or more of the crystal structure of the nickel oxyhydroxide. If the content of *β*-type crystal is less than 90%, the bulk density or tap density of the nickel oxyhydroxide decreases, thereby resulting in a decrease in the density at which the nickel oxyhydroxide is filled into a case having a predetermined volume.

The volume-basis mean particle size of the nickel oxyhydroxide is 8 to 15 µm. If the mean particle size of the nickel oxyhydroxide is less than 8 µm, or if the mean particle size is greater than 15 µm, the degree of contact between particles of the positive electrode mixture lowers, which may result in a large decrease in capacity upon storage.
Therefore, when the nickel oxyhydroxide has a mean particle size of 8 to 15 µm, the battery capacity improves and the self-decomposition of the nickel oxyhydroxide decreases, thereby making it possible to significantly improve the storage performance of the battery.

Further, as described above, one large characteristic of the present invention is that the nickel oxyhydroxide includes at least manganese dissolved therein. As a result of diligent research of various nickel hydroxides and nickel oxyhydroxides, the present inventors have found that a nickel hydroxide including at least a suitable amount of manganese dissolved therein can be very easily oxidized chemically by using an oxidizing agent.

Also, since the nickel oxyhydroxide includes manganese, the electronic conductivity of the nickel oxyhydroxide is maintained high. Thus, even when the manganese dioxide discharges after the discharge of the nickel oxyhydroxide, the manganese dioxide can also provide a sufficient capacity.

It is preferred that the nickel oxyhydroxide have one or more of the following physical properties:

### (4) a nickel mean valence of 2.95 to 3.05;

### (5) a tap density of 2.15 g/cm³ or more; and

### (6) a BET specific surface area of 5 to 20 m²/g.

If the mean valence of nickel contained in the nickel oxyhydroxide is less than 2.95, the capacity of the nickel oxyhydroxide per unit weight decreases, which may result in a decrease in battery capacity. On the other hand, if the mean valence of nickel exceeds 3.05, the ratio of γ-type crystal in the nickel oxyhydroxide increases, which may result in deterioration in high-loaded discharge characteristics. The mean valence of nickel contained in the nickel oxyhydroxide can be determined, for example, by the following ICP emission spectrometry and oxidation-reduction titration.

### (A) Measurement of metal weight ratio in nickel oxyhydroxide

A predetermined amount of a nickel oxyhydroxide is mixed with an aqueous solution of nitric acid, and the mixture is heated to dissolve all the nickel oxyhydroxide. The resultant solution is then analyzed with an ICP emission spectrometer (e.g., VISTA-RL available from VARIAN Inc.). In this way, the weight ratio of each metal element contained in the nickel oxyhydroxide (nickel, manganese, etc.) is determined.

### (B) Measurement of average nickel valence by oxidation-reduction titration

A nickel oxyhydroxide is mixed with potassium iodide and sulfuric acid, and the mixture is sufficiently stirred to completely dissolve the nickel oxyhydroxide. In this dissolution step, high-valence nickel ions, manganese ions, and the like oxidize the iodide ion to iodine, whereby the nickel ions, manganese ions, and the like are reduced to bivalence. The resulting iodine is titrated with a 0.1 mol/L aqueous solution of sodium thiosulfate. From the concentration of the sodium thiosulfate and the titrated amount, the total amount of the above-mentioned nickel ions, manganese ions, and the like with a valence greater than bivalence can be determined.

Using the total amount of the nickel ions, manganese ions, and the like with a valence greater than bivalence and the weight ratios of the metals obtained in the above (A), the mean valence of nickel in the nickel oxyhydroxide can be estimated. Therein, suppose that the valence of manganese contained in the nickel oxyhydroxide is 4. Further, if cobalt is contained in the nickel oxyhydroxide, suppose that the valence of cobalt is 3.5.

Further, according to the present invention, it is preferred that the tap density of the nickel oxyhydroxide be 2.15 g/cm³ or more. This enables the nickel oxyhydroxide to be preferably filled into the case.

Also, it is preferred that the BET specific surface area of the nickel oxyhydroxide be in the range of 5 to 20 m²/g. This enables the positive electrode mixture to be preferably impregnated with the electrolyte.

Also, it is preferred that the nickel oxyhydroxide have sodium ions on the particle surface thereof. In this case, it is preferred that the sodium ions account for 0.5 to 1 % by weight of the total of the nickel oxyhydroxide and the sodium ions.
Nickel oxyhydroxide is often produced by adding an oxidizing agent such as an aqueous solution of sodium hypochlorite to nickel hydroxide dispersed in an aqueous solution of sodium hydroxide. Thus, sodium ions are carried on the surface of the nickel oxyhydroxide depending on water-washing condition after oxidation. If the amount of sodium ions carried on the surface of the nickel oxyhydroxide exceeds 1% by weight of the total of the nickel oxyhydroxide and the sodium ions, the sodium ions exert a large harmful effect, which may result in degradation in battery performance, mainly storage characteristics. On the other hand, if the amount of sodium ions carried on the surface is less than 0.5% by weight, the valence of nickel in the surface layer of the nickel oxyhydroxide is apt to lower upon discharge. Hence, its capacity may not be fully utilized.

The amount of sodium ions carried on the surface of a nickel oxyhydroxide is determined, for example, as follows.
A predetermined amount of nickel oxyhydroxide powder is mixed with an aqueous solution of nitric acid, and the mixture is heated to dissolve all the nickel oxyhydroxide powder. The resultant solution is then analyzed by an ICP emission spectrometor (eg., VISTA-RL available from VARIAN Inc.) to determine the amount of sodium. Using the amount of sodium thus obtained, the ratio of sodium ions (% by weight) to the total of the nickel oxyhydroxide and the sodium ions is determined.

Also, it is preferred that the nickel oxyhydroxide account for 10 to 80 % by weight of the positive electrode mixture. When the manganese dioxide and the nickel oxyhydroxide as the positive electrode active materials are compared, the manganese dioxide is superior in terms of capacity per unit weight, density at which it is filled into the case, material costs, etc. However, the nickel oxyhydroxide is superior in terms of discharge voltage, high-loaded discharge characteristics, etc. Accordingly, considering the balance between the overall battery characteristics and the costs, it is most preferable that the mixing ratio of the nickel oxyhydroxide in the positive electrode mixture be in the above-mentioned range.

The manganese dioxide contained in the positive electrode mixture of the alkaline battery of the present invention is preferably electrolytic manganese dioxide with a volume-basis mean particle size of approximately 30 to 50 µm.

As the conductive agent, graphite, various carbon blacks, fibrous carbon, and the like can be used. Among them, the most preferable conductive agent is graphite powder with a volume-basis mean particle size of approximately 5 to 20 µm. This is because positive electrode pellets can be easily molded and battery production is unlikely to have problems. Further, the use of such graphite makes it possible to stabilize battery characteristics. As used herein, graphite refers to crystalline carbon in which the interplanar spacing (d₀₀₂) of the (002) plane determined by powder X-ray diffraction analysis is 3.4 A or less.

Also, it is preferred that the conductive agent account for 3 to 10 % by weight of the positive electrode mixture. This is because the volume energy density of the active materials in the positive electrode mixture can be sufficiently enhanced so as to provide satisfactory high-loaded discharge characteristics.

### Example

The present invention is hereinafter described more specifically by way of Examples.

### Example 1

### (Nickel oxyhydroxide preparation)

Predetermined concentrations of an aqueous solution of nickel sulfate (II), an aqueous solution of manganese sulfate (II), an aqueous solution of sodium hydroxide, and ammonia water were continuously fed by a pump in predetermined amounts into a reaction vessel equipped with stirring blades. The supplied solution was continuously mixed and stirred in the reaction vessel, whereby nickel hydroxide particles were precipitated. The pH of the reaction solution in the reaction vessel was adjusted to 12, and the temperature was adjusted to 50°C. The precipitated nickel hydroxide particles were washed with water and dried in a vacuum. In synthesizing the nickel hydroxide, an adjustment was made such that the content of manganese included in the nickel hydroxide became 5% by mole of the total amount of metal ions contained in the nickel hydroxide. This nickel hydroxide was named nickel hydroxide "a" (Ni_{0.95}Mn_{0.05}(OH)₂).

Also, a nickel hydroxide "b" (Ni_{0.95}Zn_{0.05}(OH)₂), a nickel hydroxide "c" (Ni_{0,95}Co_{0.05}(OH)₂), and a nickel hydroxide "d" (Ni_{0.95}Ca_{0.05}(OH)₂) were prepared in the same manner as the preparation of the nickel hydroxide "a", except for the use of an aqueous solution of zinc sulfate (II), an aqueous solution of cobalt sulfate (II), or an aqueous solution of calcium nitrate (II) instead of the aqueous solution of manganese sulfate (II).

Also, a nickel hydroxide "e" (Ni_{0.95}Zn_{0.025}Co_{0.025}(OH)₂) was prepared in the same manner as the preparation of the nickel hydroxide "a", except for the use of a mixed aqueous solution of zinc sulfate (II) and cobalt sulfate (II) instead of the aqueous solution of manganese sulfate (II).

Further, a nickel hydroxide "f" including no metal element was prepared in the same manner as the preparation of the nickel hydroxide "a", except for the non-use of the aqueous solution of manganese sulfate (II).

The nickel hydroxides "a" to "f" thus obtained were analyzed by powder X-ray diffraction analysis. As a result, it was confirmed that the nickel hydroxides "a" to "f" had a β-type crystal structure (β-type ratio: 100%), and that the nickel hydroxides "a" to "e" included the added metal elements that were dissolved in the nickel hydroxide crystal. The volume-basis mean particle sizes of these nickel hydroxides "a" to "f" were measured by a laser diffraction particle size analyzer (Microtrack FRA available from Nikkiso Co., Ltd.), and they were found to be approximately 10 µm. Their tap densities were measured by a tap density measuring device (Tap denser KYT-4000 available from Seishin Enterprise Co., Ltd.), and they were found to be approximately 2.2 g/cm³. Also, their BET specific surface areas were measured by a BET specific surface measuring device (ASAP-2010 available from Shimadzu Corporation), and they were found to be 10 to 12 m²/g.
It should be noted that the above-mentioned devices were also used in the following examples to measure the volume-basis mean particle size, tap density, and BET specific surface area.

Next, 200 g of the nickel hydroxide "a" was put into 1 L of an aqueous solution of sodium hydroxide (concentration: 0.1 mol/L). While the resultant solution was stirred, a predetermined amount of an aqueous solution of sodium hypochlorite (effective chlorine concentration: 10 % by weight) was added thereto as the oxidizing agent, to prepare a reaction solution. The reaction solution was further stirred, whereby the nickel hydroxide "a" was converted to a nickel oxyhydroxide. The temperature of the reaction solution was then 50°C.

With respect to the amount of the added aqueous solution of sodium hypochlorite, there were two kinds: 1.1 equivalents and 1.8 equivalents. As used herein, 1.0 equivalent is the minimum theoretical amount required to oxidize the nickel contained in the nickel hydroxide to trivalence. Also, as for the treatment time (stirring time) after the addition of the aqueous solution of sodium hypochlorite, there were two kinds: 2.0 hours and 6.0 hours. In this way, four kinds of nickel oxyhydroxides were prepared under the four different oxidation conditions as shown in Table 1.

Subsequently, the resultant nickel oxyhydroxide particles were washed with water. The washing with water was done until the pH of the filtrate reached 11.5 (25°C). The washed nickel oxyhydroxides were dried in a vacuum at 60°C for 24 hours, to obtain nickel oxyhydroxides A1 to A4.
The amount of sodium ions carried on the surface of each nickel oxyhydroxide was measured. As a result, the amount of sodium ions was approximately 0.8% by weight of the total of the nickel oxyhydroxide and the sodium ions.

**[Table 1]**

| Nickel oxyhydroxide | Treatment time | Amount of aqueous solution of sodium hypochlorite |
|---|---|---|
| A1 | 2.0 hours | 1.1 equivalents |
| A2 | 2.0 hours | 1.8 equivalents |
| A3 | 6.0 hours | 1.1 equivalents |
| A4 | 6.0 hours | 1.8 equivalents |

Next, nickel oxyhydroxides B1 to B4, C1 to C4, D1 to D4, E1 to E4, and F1 to F4 were prepared in the same manner as the preparation of the nickel oxyhydroxides A1 to A4, except for the use of the nickel hydroxides "b" to "f". As used herein, A to F representing the respective nickel oxyhydroxides correspond to "a" to "f" of the nickel hydroxides. Also, the numbers 1 to 4 refer to the same oxidation conditions as those of A1 to A4 shown in Table 1.

All of these 24 kinds of nickel oxyhydroxides had a volume-basis mean particle size (D₅₀) of approximately 10 µm. Also, these nickel oxyhydroxides had a tap density of approximately 2.3 g/cm³ and a BET specific surface area of 10 to 15 m²/g.

Further, these 24 kinds of nickel oxyhydroxides were measured for their nickel mean valence. Table 2 shows the results.

Furthermore, powder X-ray diffraction analyses confirmed that these nickel oxyhydroxides were all composed mainly of a β-type crystal structure. That is, estimating from the intensity of the diffraction peak attributed to the (001) plane characteristic of the β-type crystal structure and the intensity of the diffraction peak attributed to the (003) plane characteristic of the γ-type crystal structure, the ratio of the β-type crystal in each of these nickel oxyhydroxides was 98% or more. However, some samples exhibited the peak of nickel hydroxide. Therefore, the height of the diffraction peak attributed to the (100) plane around diffraction angle 2θ=33.8° was read, since this height reflects the amount of the nickel hydroxide which was left unoxidized in the treatment with the oxidizing agent. Table 2 shows the results. In Table 2, "N.D." means that a diffraction peak attributed to the (100) plane did not appear. Also, the kinds of the element(s) included in the nickel oxyhydroxides are shown in Table 2.

**[Table 2]**

| Nickel oxyhydroxide | Kind of element(s) dissolved | Nickel mean valence | Height of diffraction peak attributed to (100) plane |
|---|---|---|---|
| A1 | Mn | 2.95 | N.D. |
| A2 | Mn | 2.99 | N.D. |
| A3 | Mn | 2.98 | N.D. |
| A4 | Mn | 3.01 | N.D. |
| B1 | Zn | 2.75 | 280 |
| B2 | Zn | 2.86 | 195 |
| B3 | Zn | 2.83 | 75 |
| B4 | Zn | 2.99 | N.D. |
| C1 | Co | 2.96 | N.D. |
| C2 | Co | 2.99 | N.D. |
| C3 | Co | 2.98 | N.D. |
| C4 | Co | 3.02 | N.D. |
| D1 | Ca | 2.71 | 310 |
| D2 | Ca | 2.85 | 205 |
| D3 | Ca | 2.82 | 220 |
| D4 | Ca | 2.97 | N.D. |
| E1 | Zn and Co | 2.88 | 150 |
| E2 | Zn and Co | 2.94 | 35 |
| E3 | Zn and Co | 2.92 | 50 |
| E4 | Zn and Co | 3.00 | N.D. |
| F1 | None | 2.85 | 155 |
| F2 | None | 2.91 | 55 |
| F3 | None | 2.92 | 50 |
| F4 | None | 2.95 | N.D. |

The nickel contained in the nickel hydroxide "a" or "c" was oxidized until its mean valence became almost 3.0 even when the amount of the aqueous solution of sodium hypochlorite was small and the treatment time was short. This indicates that the nickel hydroxide "a" including manganese or the nickel hydroxide "c" including cobalt can be oxidized easily.

On the other hand, the nickel contained in the nickel hydroxide "b", the nickel hydroxide "d", the nickel hydroxide "e", and the nickel hydroxide "f" was not oxidized until its mean valence became almost 3.0, except for the case where the treatment was performed for a long time with the addition of an excessive amount of the aqueous solution of sodium hypochlorite. This indicates that the oxidation does not proceed easily in the case of the nickel hydroxide "b" including zinc, the nickel hydroxide "d" including calcium, the nickel hydroxide "e" including zinc and cobalt, or the nickel hydroxide "f" including no metal element. In the nickel hydroxides "b", "d", and "e", in particular, the valence of the zinc ions and the calcium ions dissolved in the nickel hydroxide remain unchanged from the bivalence. In the case of oxidizing nickel hydroxides by an oxidizing agent, it is considered that these ions remain bivalent and are thus unlikely to be oxidized.

### (Alkaline battery production)

Using the nickel oxyhydroxide powders A1 to F4 thus obtained, alkaline dry batteries as shown in FIG. 1 were produced.

### (Positive electrode mixture preparation)

First, electrolytic manganese dioxide with a volume-basis mean particle size of 40 µm, the nickel oxyhydroxide A1, a conductive agent of artificial graphite (SP grade available from Nippon Graphite Industries, Ltd.; mean particle size 15 µm) were mixed in a weight ratio of 50:45:5, to prepare a powder mixture. 100 parts by weight of this powder mixture was mixed with 1 part by weight of an aqueous solution containing 40% by weight potassium hydroxide. The resultant mixture was evenly mixed with a mixer, to obtain particles having a predetermined particle size. The resultant particles were molded under pressure into hollow cylinders, to prepare positive electrode mixtures.

### (Negative electrode production)

A gelling agent of sodium polyacrylate, an alkaline electrolyte, and a negative electrode active material of zinc powder were mixed in a weight ratio of 2.5:100:200, to prepare a gel negative electrode. The alkaline electrolyte used was an aqueous solution of 40% by weight potassium hydroxide.

### (Alkaline battery assembly)

Using the positive electrode mixtures and gel negative electrode thus obtained, an AA size alkaline battery as illustrated in FIG. 1 was produced.
The positive electrode case used was made of a nickel-plated steel plate. The inner wall of this positive electrode case had a graphite coating film.
A plurality of the above-mentioned positive electrode mixtures were inserted into this positive electrode case, and the positive electrode mixtures were then pressed again so as to closely adhere to the inner face of the positive electrode case.

Subsequently, a separator and an insulating cap were inserted into the hollow space inside the positive electrode mixtures. Thereafter, an electrolyte was injected into the battery case to moisten the separator and the positive electrode mixtures. The electrolyte used was an aqueous solution of 40% by weight potassium hydroxide.

After the injection of the electrolyte, the gel negative electrode was filled into the space inside the separator. Then, a negative electrode current collector integrated with a sealing member and a bottom plate was inserted into the gel negative electrode. The opening of the positive electrode case was sealed by crimping the open edge of the positive electrode case onto the bottom plate with the sealing plate therebetween. Lastly, the outer surface of the positive electrode case was covered with an outer label, to complete a battery. The resultant battery was named battery A1.

Batteries A2 to A4, B1 to B4, C1 to C4, D1 to D4, E1 to E4, and F1 to F4 were produced in the same manner as the production of the battery 1A, except for the use of the nickel oxyhydroxides A2 to A4, B1 to B4, C1 to C4, D1 to D4, E1 to E4, and F1 to F4 instead of the nickel oxyhydroxide A1. The batteries B1 to B4, C1 to C4, D1 to D4, E1 to E4, and F1 to F4 are comparative batteries.

### (Battery evaluation)

### (Low-loaded discharge characteristics)

Each of the 24 kinds of batteries obtained in the above manner was continuously discharged at a constant current of 50 mA at 20°C until the battery voltage dropped to a cut-off voltage of 0.9 V, whereby the initial discharge capacity (hereinafter also referred to as the discharge capacity at 50 mA or the low-loaded discharge capacity) was measured.

### (High-loaded discharge characteristics)

Each of the 24 kinds of batteries was continuously discharged at a constant current of 1000 mA at 20°C until the battery voltage dropped to the cut-off voltage of 0.9 V, whereby the initial discharge capacity (hereinafter also referred to as the discharge capacity at 1000 mA or the high-loaded discharge capacity) was measured.

### (Storage characteristics)

Each of the batteries stored at 60°C for one week was continuously discharged at a constant current of 1000 mA at 20°C until the battery voltage dropped to the cut-off voltage of 0.9 V, whereby the discharge capacity (hereinafter also referred to as the post-storage discharge capacity) was measured. The ratio of the post-storage discharge capacity to the high-loaded discharge capacity was expressed as a percentage as the capacity retention rate.

Table 3 shows the results. The low-loaded discharge capacities and high-loaded discharge capacities shown in Table 3 are percentages relative to the low-loaded discharge capacity and high-loaded discharge capacity of the comparative battery F4, respectively.

**[Table 3]**

| | Low-loaded discharge capacity | High-loaded discharge capacity | Capacity retention rate after 1-week storage at 60°C (%) |
|---|---|---|---|
| Battery A1 | 101 | 101 | 77 |
| Battery A2 | 103 | 102 | 78 |
| Battery A3 | 102 | 102 | 78 |
| Battery A4 | 103 | 103 | 80 |
| Comparative battery B1 | 88 | 83 | 70 |
| Comparative battery B2 | 95 | 93 | 75 |
| Comparative battery B3 | 94 | 91 | 74 |
| Comparative battery B4 | 97 | 97 | 75 |
| Comparative battery C1 | 100 | 97 | 73 |
| Comparative battery C2 | 100 | 97 | 75 |
| Comparative battery C3 | 101 | 97 | 74 |
| Comparative battery C4 | 102 | 98 | 75 |
| Comparative battery D1 | 85 | 80 | 72 |
| Comparative battery D2 | 94 | 91 | 76 |
| Comparative battery D3 | 92 | 90 | 76 |
| Comparative battery D4 | 98 | 97 | 76 |
| Comparative battery E1 | 94 | 91 | 70 |
| Comparative battery E2 | 97 | 95 | 74 |
| Comparative battery E3 | 96 | 95 | 73 |
| Comparative battery E4 | 98 | 98 | 75 |
| Comparative battery F1 | 94 | 92 | 52 |
| Comparative battery F2 | 96 | 95 | 61 |
| Comparative battery F3 | 97 | 97 | 62 |
| Comparative battery F4 | 100(standard) | 100(standard) | 65 |

The batteries A1 to A4 exhibited good values in terms of all of the low-loaded discharge capacity, the high-loaded discharge capacity, and the post-storage capacity retention rate after one-week storage at 60°C. The reason of high low-loaded discharge capacities and high high-loaded discharge capacities is probably as follows. That is, since the nickel valences of the nickel oxyhydroxides A1 to A4 are sufficiently high, the discharge capacities of the nickel oxyhydroxides become large. Further, even when the manganese dioxide discharges after the discharge of the nickel oxyhydroxide, the manganese dissolved therein produces the effect of maintaining the electronic conductivity of the nickel oxyhydroxide high, so that the manganese dioxide also provides a sufficient capacity.

Also, although the mechanism of the improvement in storage characteristics is not clear, it is probably as follows. The manganese dissolved in the crystal of the nickel oxyhydroxide caused an increase in the oxygen-generating overvoltage on the nickel oxyhydroxide. As a result, the self-discharge was suppressed, thereby resulting in high capacity retention rates.

On the other hand, in the case of the batteries B1 to B3, D1 to D3, E1 to E3, and F1 to F3, which used nickel oxyhydroxides having not-sufficiently-high nickel mean valences and partially containing unreacted nickel hydroxide, their low-loaded discharge capacities and high-loaded discharge capacities were not so improved.

The battery B4, the battery D4, and the battery E4, which included nickel oxyhydroxides that were obtained by the long treatment with the excessive addition of the aqueous solution of sodium hypochlorite, exhibited somewhat better low-loaded discharge capacities, high-loaded discharge capacities, and capacity retention rates than those of the batteries B1 to B3, those of the batteries D1 to D3, and those of the batteries E1 to E3, respectively. However, their performance was inferior to that of the batteries A1 to A4 of the present invention.

The batteries C1 to C4, which used nickel oxyhydroxides including cobalt, exhibited relatively high low-loaded discharge capacities, since the nickel valence of the nickel oxyhydroxide was heightened. However, their high-loaded discharge capacities were not so high, because the cobalt dissolved therein decreases the oxidation reduction potential of the nickel oxyhydroxide.

As described above, the inclusion of a nickel oxyhydroxide A1, A2, A3 or A4 and manganese dioxide in the positive electrode mixture makes it possible to heighten the capacity of an alkaline battery and improve the storage performance thereof. Also, it can be seen that the inclusion of manganese greatly facilitates the preparation of a nickel oxyhydroxide from a nickel hydroxide, i.e., the oxidization of the nickel hydroxide by an oxidizing agent.

### Example 2

The amount of manganese to be included in a nickel oxyhydroxide and the state of the manganese were examined.
Seven kinds of nickel hydroxides with different manganese contents were synthesized in the same manner as the preparation of the nickel hydroxide "a", except that the supply speed of the aqueous solution of manganese sulfate (II) was adjusted such that the content of manganese was 0.3% by mole, 0.5% by mole, 1% by mole, 3% by mole, 7% by mole, 10% by mole, or 12% by mole of the total amount of metal ions contained in the nickel hydroxide. These were named nickel hydroxides m1 to m7.

The nickel hydroxides m1 to m7 were analyzed by powder X-ray diffraction analysis, and it was confirmed that these nickel hydroxides had a β-type crystal structure and that the added manganese was dissolved in the nickel hydroxide crystal.

Nickel hydroxides m8 and m9 were prepared in the same manner as the preparation of the nickel hydroxide "a", except that the supply speed of the aqueous solution of manganese sulfate (II) was adjusted such that the content of manganese was 3% by mole or 7% by mole of the total amount of metal ions contained in the nickel hydroxide, that the pH of the reaction solution was adjusted to 11.0, and that the temperature of the reaction solution was adjusted to 40°C.

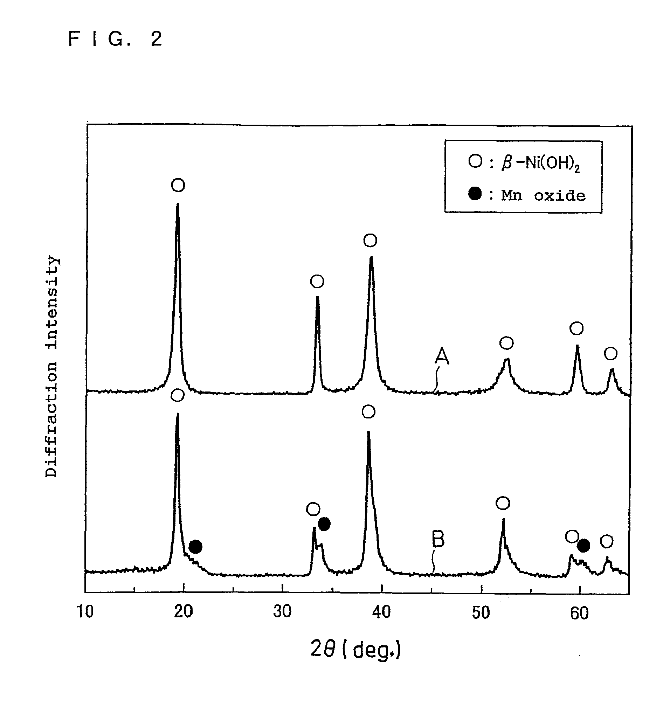

The nickel hydroxides m8 and m9 were analyzed by powder X-ray diffraction analysis. As examples, FIG. 2 shows an X-ray diffraction profile (curved line A) of the nickel hydroxide m5 (Mn: 7% by mole, dissolved in the form of solid solution) and an X-ray diffraction profile (curved line B) of the nickel hydroxide m9 (Mn: 7% by mole, eutectic).

These nickel hydroxides m8 and m9 had a β-type nickel hydroxide crystal structure. However, as shown in FIG. 2, the nickel hydroxide m9 also exhibited peaks attributable to a manganese oxide (the positions of black circles in FIG. 2). Thus, in the nickel hydroxides m8 and m9, manganese is not dissolved in the nickel hydroxide crystal, but manganese is dispersed in the form of a manganese oxide in the nickel hydroxide. That is, it is presumed that the nickel hydroxides m8 and m9 containing manganese is eutectic.

Also, the nickel hydroxides m1 to m9 had a volume-basis mean particle size of approximately 10 µm, a tap density of approximately 2.2 g/cm³, and a BET specific surface area of 10 to 12 m²/g.

Next, the nickel hydroxide m1 was converted to a nickel oxyhydroxide in the same manner as in Example 1, except that 200 g of the nickel hydroxide m1 was used, that the temperature of the reaction solution was set to 50°C, that the amount of the added aqueous solution of sodium hypochlorite was set to 1.5 equivalents, and that the treatment time (stirring time) after the addition of the aqueous solution of sodium hypochlorite was set to 4.0 hours.

Subsequently, the resultant nickel oxyhydroxide particles were washed with water. The washing with water was done until the pH of the filtrate reached 11.5 (25°C). The washed nickel oxyhydroxide was dried in a vacuum at 60°C for 24 hours, to obtain a nickel oxyhydroxide M1.

Nickel oxyhydroxides M2 to M9 were prepared in the same manner as the preparation of the nickel oxyhydroxide M1, except for the use of the nickel hydroxides m2 to m9 instead of the nickel hydroxide m1. The amount of the sodium ions carried on the surface of each of the nickel oxyhydroxides M1 to M9 was approximately 0.8% by weight of the total of the nickel oxyhydroxide and the sodium ions.

The resultant 9 kinds of nickel oxyhydroxides had a volume-basis mean particle size (D₅₀) of approximately 10 µm. These nickel oxyhydroxides had a tap density of approximately 2.3 g/cm³, a BET specific surface area of 10 to 15 m²/g, and a nickel mean valence of approximately 3.0.
The nickel oxyhydroxides M1 to M9 were analyzed by powder X-ray diffraction analysis. As a result, no residual nickel hydroxide was found in these nickel oxyhydroxides.

Next, using the nickel oxyhydroxides M1 to M9, alkaline batteries M1 to M9 were produced in the same manner as in Example 1. The battery M1 and batteries M7 to M9 are comparative batteries.

The batteries M1 to M9 thus produced were measured for their low-loaded discharge capacity, high-loaded discharge capacity and post-storage capacity retention rate in the same manner as in Example 1. Table 4 shows the results. The low-loaded discharge capacities and high-loaded discharge capacities shown in Table 4 are percentages relative to the low-loaded discharge capacity and high-loaded discharge capacity of the comparative battery F4, respectively, in the same manner as in Table 3. Table 4 also shows the amounts of manganese (% by mole) relative to the metal elements contained in the nickel oxyhydroxides and the state thereof (dissolved in the form of solid solution or eutectic).

**[Table 4]**

| | Amount of Mn in nickel oxyhydroxide (mol%) and state thereof | Low-loaded discharge capacity | High-loaded discharge capacity | Capacity retention rate after 1-week storage at 60°C (%) |
|---|---|---|---|---|
| Comparative battery M1 | 0.3, solid solution | 98 | 99 | 66 |
| Battery M2 | 0.5, solid solution | 101 | 101 | 71 |
| Battery M3 | 1, solid solution | 102 | 102 | 74 |
| Battery M4 | 3, solid solution | 103 | 102 | 77 |
| Battery M5 | 7, solid solution | 102 | 101 | 79 |
| Battery M6 | 10, solid solution | 101 | 101 | 80 |
| Comparative battery M7 | 12, solid solution | 98 | 97 | 80 |
| Comparative battery M8 | 3, eutectic | 98 | 98 | 72 |
| Comparative battery M9 | 7, eutectic | 97 | 96 | 74 |
| Comparative battery F4 | None | 100(standard) | 100(standard) | 65 |

Table 4 indicates that the batteries M2 to M6, which used nickel oxyhydroxides including 0.5 to 10 % by mole of manganese, exhibited high values in terms of all of the low-loaded discharge capacity, high-loaded discharge capacity, and capacity retention rate.
On the other hand, the battery M1, which used a nickel oxyhydroxide including 0.3% by mole of manganese, exhibited low values in these characteristics. This is probably because the amount of manganese is too small and it therefore failed to produce a sufficient effect.
Also, the battery M7, which used a nickel oxyhydroxide including 12% by mole of manganese, exhibited low values in low-loaded discharge capacity and high-loaded discharge capacity, since the content of nickel contributing to battery capacity is relatively small.

Further, the batteries M8 and M9, in which the manganese-containing nickel oxyhydroxide was eutectic, exhibited relatively high values in capacity retention rate, but their low-loaded discharge capacities and high-loaded discharge capacities were markedly low. The reason is probably as follows. When manganese is dissolved, the electronic conductivity at the final stage of discharge of a nickel oxyhydroxide is maintained high, so that manganese dioxide can also provide a sufficient capacity, thereby heightening the capacity. However, such effect is not produced so well in the nickel oxyhydroxides M8 and M9.

### Example 3

In this example, the mean particle size (granular variation) of a nickel oxyhydroxide was examined.
Nickel hydroxides were prepared in the same manner as the preparation of the nickel hydroxide "a", except that the volume-basis mean particle sizes (D₅₀) of these nickel hydroxides were varied to 5 µm, 8 µm, 11 µm, 15 µm, and 20 µm by varying the supply speed of the ammonia water serving as a complex-ion forming agent, in order to adjust the size of crystalline nucleus of the nickel hydroxide precipitated in the reaction vessel and the growth speed of the nickel hydroxide particles. The resultant nickel hydroxides were named nickel hydroxides x1 to x5.

The nickel hydroxides x1 to x5 were analyzed by powder X-ray diffraction analysis, and it was found that these nickel hydroxides had a β-type crystal structure, with manganese dissolved therein. Also, these nickel hydroxides had a tap density of 2.1 to 2.2 g/cm³ and a BET specific surface area of 10 to 18 m²/g.

Next, the nickel hydroxide x1 was converted to a nickel oxyhydroxide in the same manner as in Example 1, except that 200 g of the nickel hydroxide x1 was used, the temperature of the reaction solution was set to 50°C, that the amount of the added aqueous solution of sodium hypochlorite was set to 1.5 equivalents, and that the treatment time (stirring time) after the addition of the aqueous solution of sodium hypochlorite was set to 4.0 hours.

Subsequently, the resultant nickel oxyhydroxide was washed with water. The washing with water was done until the pH of the filtrate reached 11.5 (25°C). Thereafter, the washed nickel oxyhydroxide was dried in a vacuum at 60°C for 24 hours, to obtain a nickel oxyhydroxide X1.

Nickel oxyhydroxide X2 to X5 were prepared in the same manner as the preparation of the nickel oxyhydroxide X1, except for the use of the nickel hydroxides x2 to x5, respectively, instead of the nickel hydroxide x1. The amount of sodium ions carried on the surface of each of the nickel oxyhydroxides X1 to X5 was approximately 0.8% by weight of the total of the nickel oxyhydroxide and the sodium ions.

The nickel oxyhydroxides X1 to X5 were measured for their mean particle size. As a result, it was found that the nickel oxyhydroxides X1 to X5 had almost the same mean particle sizes (D₅₀) as those of the nickel hydroxides x1 to x5, respectively. Also, the tap densities of these nickel oxyhydroxides were in the range of 2.2 to 2.3 g/cm³, and their BET specific surface areas were in the range of 10 to 20 m²/g.

The mean valence of nickel contained in each of the 5 kinds of nickel oxyhydroxides was approximately 3.0.
Also, the presence or absence of a nickel hydroxide was determined by powder X-ray diffraction analysis. As a result, no residual nickel hydroxide was found in the nickel oxyhydroxides X1 to X5.

Next, using the nickel oxyhydroxides X1 to X5, alkaline batteries X1 to X5 were produced in the same manner as in Example 1. The batteries X1 and X5 are comparative batteries.

The batteries X1 to X5 thus produced were measured for their low-loaded discharge capacity, high-loaded discharge capacity and post-storage capacity retention rate. Table 5 shows the results. The low-loaded discharge capacities and high-loaded discharge capacities shown in Table 5 are percentages relative to the low-loaded discharge capacity and high-loaded discharge capacity of the comparative battery F4, respectively, in the same manner as in Table 3. Table 5 also shows the mean particle size (D₅₀) of the nickel oxyhydroxide included in each battery.

**[Table 5]**

| | Mean particle size (D₅₀) of nickel oxyhydroxide (µm) | Low-loaded discharge capacity | High-loaded discharge capacity | Capacity retention rate after 1-week storage at 60°C (%) |
|---|---|---|---|---|
| Comparative battery X1 | 5 | 99 | 99 | 67 |
| Battery X2 | 8 | 103 | 102 | 77 |
| Battery X3 | 11 | 103 | 103 | 79 |
| Battery X4 | 15 | 103 | 103 | 76 |
| Comparative battery X5 | 20 | 100 | 99 | 66 |
| Comparative battery F4 | 10 | 100(standard) | 100(standard) | 65 |

As shown in Table 5, the batteries X2 to X4, which used nickel oxyhydroxides with volume-basis mean particle sizes (D₅₀) of 8 to 15 µm, exhibited high values in all of the low-loaded discharge capacity, high-loaded discharge capacity, and capacity retention rate.

On the other hand, the battery X1, which used a nickel oxyhydroxide with a small mean particle size of 5 µm, and the battery X5, which used a nickel oxyhydroxide with a large mean particle size of 20 µm, did not exhibit satisfactory values in low-loaded discharge capacity, high-loaded discharge capacity and capacity retention rate. Although the reason of such difference has not been fully elucidated at this moment, it is considered as follows. That is, when a nickel oxyhydroxide with a particle size of 5 µm or 20 µm is used, the degree of electrical contact between positive electrode mixture particles and the electric conductivity of the pellets associated therewith are relatively poor. Particularly, this becomes evident when the self-discharge of the nickel oxyhydroxide (conductivity deterioration of particle surface) proceeds during the one week storage at 60°C.

Also, another experiment was conducted in which the mean particle size of electrolytic manganese dioxide contained in the positive electrode mixture was varied in the range of 30 to 50 µm, the mean particle size of graphite was varied in the range of 5 to 20 µm, or the mixing ratio of a nickel oxyhydroxide was varied.
Although the details are not described herein, it was shown that the capacity retention rate of the resultant battery after one-week storage at 60°C was related with the mean particle size of the nickel oxyhydroxide. That is, it was confirmed that the use of a nickel oxyhydroxide with a volume-basis mean particle size (D₅₀) of 8 to 15 µm provides good capacity retention rate.

As described above, it was found that adjusting the mean particle size of a nickel oxyhydroxide in the range of 8 to 15 µm is extremely important in terms of securing discharge capacity and storage performance.

### Example 4

In this example, an experiment was conducted in order to obtain findings regarding the nickel mean valence of a nickel oxyhydroxide.
A nickel hydroxide was converted to a nickel oxyhydroxide in the same manner as in Example 1, except that 200 g of the nickel hydroxide "a" (composition: Ni_{0.95}Mn_{0.05}(OH)₂) prepared in Example 1 was used, that the temperature of the reaction solution was set to 50°C, that the amount of the added aqueous solution of sodium hypochlorite was varied to 0.9 equivalent, 1.0 equivalent, 1.2 equivalents, 2.0 equivalents, 2.5 equivalents, or 3.0 equivalents, and that the treatment time (stirring time) after the addition of the aqueous solution of sodium hypochlorite was set to 6.0 hours.

Subsequently, the resultant 6 kinds of nickel oxyhydroxides were washed with water. The washing with water was done until the pH of the filtrate reached 11.5 (25°C). Thereafter, the washed nickel oxyhydroxides were dried in a vacuum at 60°C for 24 hours, to obtain nickel oxyhydroxides Y1 to Y6. The amount of sodium ions carried on the surface of each nickel oxyhydroxide was approximately 0.8% by weight of the total of the nickel oxyhydroxide and the sodium ions.

The resultant 6 kinds of nickel oxyhydroxides had a volume-basis mean particle size (D₅₀) of approximately 10 µm, a tap density of approximately 2.3 g/cm³, and a BET specific surface area of 10 to 15 m²/g.

The mean valence of nickel contained in each of the resultant nickel oxyhydroxides was measured. Table 6 shows the results. Table 6 also shows the amounts of the added aqueous solution of sodium hypochlorite.

**[Table 6]**

| Nickel oxyhydroxide | Amount of aqueous solution of sodium hypochlorite | Mean valence of nickel contained in nickel oxyhydroxide |
|---|---|---|
| Y1 | 0.9 equivalents | 2.89 |
| Y2 | 1.0 equivalents | 2.93 |
| Y3 | 1.2 equivalents | 2.95 |
| Y4 | 2.0 equivalents | 3.02 |
| Y5 | 2.5 equivalents | 3.05 |
| Y6 | 3.0 equivalents | 3.07 |

Next, using the nickel oxyhydroxides Y1 to Y6, alkaline batteries Y1 to Y6 were produced in the same manner as in Example 1.

The batteries Y1 to Y6 thus produced were measured for their low-loaded discharge capacity, high-loaded discharge capacity and post-storage capacity retention rate in the same manner as in Example 1. Table 7 shows the results. The low-loaded discharge capacities and high-loaded discharge capacities shown in Table 7 are percentages relative to the low-loaded discharge capacity and high-loaded discharge capacity of the comparative battery F4, respectively.

**[Table 7]**

| | Low-loaded discharge capacity | High-loaded discharge capacity | Capacity retention rate after 1-week storage at 60°C (%) |
|---|---|---|---|
| Battery Y1 | 98 | 98 | 73 |
| Battery Y2 | 100 | 99 | 77 |
| Battery Y3 | 101 | 101 | 79 |
| Battery Y4 | 103 | 103 | 80 |
| Battery Y5 | 103 | 102 | 80 |
| Battery Y6 | 103 | 98 | 80 |
| Comparative battery F4 | 100(standard) | 100(standard) | 65 |

As shown in Table 7, the batteries Y3 to Y5 with nickel mean valences of 2.95 to 3.05 exhibited high values in all of the low-loaded discharge capacity, high-loaded discharge capacity, and capacity retention rate.
The batteries Y1 and Y2 with nickel mean valences of less than 2.95 exhibited slightly lower discharge capacities, since the capacity of the nickel oxyhydroxide per unit weight becomes less.
The battery Y6 with a nickel mean valence of higher than 3.05 exhibited a slightly lower high-loaded discharge capacity. This is probably because if the nickel valence becomes very high, the ratio of inactive γ-type structure in the nickel oxyhydroxide increases.
As described above, in the present invention, it is preferred to adjust the mean valence of nickel contained in a nickel oxyhydroxide in the range of 2.95 to 3.05.
It should be noted that all of these batteries have good storage characteristics and these batteries therefore produce sufficient effects in applications where particularly storage characteristics are important.

### Example 5

In this example, the water-washing conditions of a nickel oxyhydroxide were examined. It should be noted that a change in water-washing conditions causes a change in the amount of sodium ions carried on the particle surface of the nickel oxyhydroxide.

A nickel hydroxide was converted to a nickel oxyhydroxide in the same manner as in Example 1, except that 200 g of the nickel hydroxide "a" (composition: Ni_{0.95}Mn_{0.05}(OH)₂ prepared in Example 1 was used, that the temperature of the reaction solution was set to 50°C, that the amount of the added aqueous solution of sodium hypochlorite was set to 1.5 equivalents, and that the treatment time (stirring time) after the addition of the aqueous solution of sodium hypochlorite was set to 4.0 hours.

Subsequently, the resultant nickel oxyhydroxide was washed with water. The washing with water was terminated at the point when the pH (25°C) of the filtrate reached 12.5, 12.0, 11.5, 11.0, or 10.5. Each nickel oxyhydroxide after the water-washing was dried in a vacuum at 60°C for 24 hours, to obtain nickel oxyhydroxides W1 to W5 with different amounts of sodium ions carried on the surface.

The resultant five kinds of nickel oxyhydroxides W1 to W5 had a mean particle sizes (D₅₀) of approximately 10 µm. Also, these nickel oxyhydroxides had a tap density of approximately 2.3 g/cm³ and a BET specific surface area of 10 to 15 m²/g.

The amount of sodium ions carried on the surface of each nickel oxyhydroxide was measured. Table 8 shows the results. Also, Table 8 shows the pH of filtrate derived from water used to wash each nickel oxyhydroxide.

**[Table 8]**

| Nickel oxyhydroxide | pH of filtrate derived from washed water | Amount of sodium ion carried on nickel oxyhydroxide surface (wt%) |
|---|---|---|
| W1 | 12.5 | 1.42 |
| W2 | 12.0 | 0.98 |
| W3 | 11.5 | 0.76 |
| W4 | 11.0 | 0.51 |
| W5 | 10.5 | 0.39 |

Next, using the nickel oxyhydroxides W1 to W5, alkaline batteries W1 to W5 were produced in the same manner as in Example 1.

The batteries W1 to W5 thus produced were measured for their low-loaded discharge capacity, high-loaded discharge capacity and post-storage capacity retention rate in the same manner as in Example 1. Table 9 shows the results. The low-loaded discharge capacities and high-loaded discharge capacities shown in Table 9 are percentages relative to the low-loaded discharge capacity and high-loaded discharge capacity of the comparative battery F4, respectively.

**[Table 9]**

| | Low-loaded discharge capacity | High-loaded discharge capacity | Capacity retention rate after 1-week storage at 60°C (%) |
|---|---|---|---|
| Battery W1 | 101 | 100 | 69 |
| Battery W2 | 103 | 103 | 77 |
| Battery W3 | 103 | 102 | 78 |
| Battery W4 | 102 | 101 | 77 |
| Battery W5 | 100 | 100 | 72 |
| Comparative battery F4 | 100(standard) | 100(standard) | 65 |

As shown in Table 9, the batteries W2 to W4, in which the pH of filtrate derived from washed water was 11.0 to 12.0 and the amount of sodium ions carried on the surface was in the range of 0.5 to 1 % by weight of the total of the nickel oxyhydroxide and the sodium ions, exhibited high values in all of the low-loaded discharge capacity, high-loaded discharge capacity, and capacity retention rate.

On the other hand, the battery W1, in which the amount of sodium ions carried on the surface was greater than 1% by weight, exhibited performance degradation mainly in terms of storage characteristics, since the sodium ions have a strong effect as an impurity. Also, the battery W5, in which the amount of sodium ions carried on the surface was less than 0.5% by weight, exhibited little improvement in low-loaded and high-loaded discharge capacities. The reason is probably as follows. Since the amount of sodium ions is small, the valence of nickel on the surface layer of the nickel oxyhydroxide is apt to lower upon discharge, thereby resulting in insufficient capacity.

### Example 6

In this example, the mixing ratio of a nickel oxyhydroxide in the positive electrode mixture was examined.
Electrolytic manganese dioxide with a volume-basis mean particle size of 40 µm, the nickel oxyhydroxide A4 prepared in Example 1, and artificial graphite (SP grade available from Nippon Graphite Industries, Ltd.; mean particle size 15 µm) were mixed together in 10 kinds of weight ratios as listed in Table 10, to obtain powder mixtures. Alkaline batteries Z1 to Z10 were produced in the same manner as in Example 1, except for the use of these powder mixtures. The batteries Z1 and Z10 are comparative batteries.

The batteries Z1 to Z10 thus produced were measured for their low-loaded discharge capacity and high-loaded discharge capacity in the same manner as in Example 1. Table 10 shows the results. Also, the low-loaded discharge capacities and high-loaded discharge capacities shown in Table 10 are percentages relative to the low-loaded discharge capacity and high-loaded discharge capacity of the comparative battery F4, respectively. Also, Table 10 shows the mixing ratio of electrolytic manganese dioxide, the nickel oxyhydroxide, and graphite contained in the positive electrode mixture of the comparative battery F4.

**[Table 10]**

| | Mixing ratio of positive electrode mixture (wt%) | | | Low-loaded discharge capacity | High-loaded discharge capacity |
|---|---|---|---|---|---|
| | Electrolytic manganese dioxide | Nickel oxyhydroxide | Graphite | | |
| Comparative battery Z1 | 95 | 0 | 5 | 108 | 81 |
| Battery Z2 | 90 | 5 | 5 | 107 | 92 |
| Battery Z3 | 85 | 10 | 5 | 106 | 101 |
| Battery Z4 | 80 | 15 | 5 | 106 | 102 |
| Battery Z5 | 65 | 30 | 5 | 104 | 103 |
| Battery Z6 | 30 | 65 | 5 | 103 | 104 |
| Battery Z7 | 15 | 80 | 5 | 101 | 105 |
| Battery Z8 | 10 | 85 | 5 | 98 | 105 |
| Battery Z9 | 5 | 90 | 5 | 96 | 106 |
| Comparative battery Z10 | 0 | 95 | 5 | 95 | 106 |
| Comparative battery F4 | 50 | 45 | 5 | 100(standard) | 100(standard) |

As shown in Table 10, the batteries Z8, Z9 and Z10, in which the ratio of the nickel oxyhydroxide A4 was greater than 80% by weight, exhibited decreases in low-loaded discharge capacity. The batteries Z1 and Z2, in which the ratio of the nickel oxyhydroxide A4 was less than 10% by weight, exhibited decreases in high-loaded discharge capacity. These results indicate that it is preferable that 10 to 80 % by weight of a nickel oxyhydroxide including manganese be included in the positive electrode mixture since it provides both good low-loaded discharge capacity and good high-loaded discharge capacity.

Also, the batteries Z1 to Z10 are superior in at least one of the high-loaded discharge capacity and the low-loaded discharge capacity. Thus, the use of these batteries in applications suited for their characteristics can produce sufficient effects.

### Example 7

In this example, the mixing ratio of graphite serving as the conductive agent in the positive electrode mixture was examined.
The electrolytic manganese dioxide used in Example 1 and the nickel oxyhydroxide A4 prepared in Example 1 were mixed together in a weight ratio of 1:1.
The graphite used in Example 1 was added thereto in 6 kinds of weight ratios relative to the positive electrode mixture as listed in Table 11, whereby 6 kinds of powder mixtures were obtained. Alkaline batteries U1 to U6 were produced in the same manner as in Example 1, except for the use of these powder mixtures.

These batteries U1 to U6 thus produced were measured for their low-loaded discharge capacity and high-loaded discharge capacity in the same manner as in Example 1. Table 11 shows the results. The low-loaded discharge capacities and high-loaded discharge capacities shown in Table 11 are percentages relative to the low-loaded discharge capacity and high-loaded discharge capacity of the comparative battery F4, respectively. Table 11 also shows the amount of graphite contained in the positive electrode mixture of the comparative battery F4.

**[Table 11]**

| | Ratio of graphite to positive electrode mixture (wt%) | Low-loaded discharge capacity | High-loaded discharge capacity |
|---|---|---|---|
| Battery U1 | 2 | 101 | 100 |
| Battery U2 | 3 | 102 | 101 |
| Battery U3 | 5 | 103 | 103 |
| Battery U4 | 8 | 102 | 103 |
| Battery U5 | 10 | 101 | 104 |
| Battery U6 | 12 | 97 | 102 |
| Comparative battery F4 | 5 | 100(standard) | 100(standard) |

As shown in Table 11, it was found that the discharge characteristics are particularly good when the ratio of graphite contained in the positive electrode mixture is 3 to 10 % by weight. The battery U1, in which the mixing ratio of graphite is less than 3% by weight, exhibited a slight decrease particularly in high-loaded discharge capacity, since the conductive network inside the positive electrode mixture becomes imperfect. In the case of the battery U6, in which the mixing ratio of graphite is greater than 10% by weight, the ratio of the active materials in the positive electrode mixture becomes relatively low, and it is probably for this reason the energy density decreases in low-loaded discharge. These results indicate that in the present invention it is preferred that 3 to 10 % by weight of the conductive agent be contained in the positive electrode mixture.
Also, each of the batteries U1 to U6 has an advantage over the comparative battery F4. Thus, the use of any of the batteries U1 to U6 in applications suited for their characteristics can produce sufficient effects.

Further, the foregoing examples relate to the use of nickel oxyhydroxides including manganese, having a tap density of 2.2 to 2.3 g/cm³ and a BET specific surface area of 10 to 20 m²/g. In consideration of the density at which nickel oxyhydroxide powder including manganese is filled into the battery case, the tap density is preferably 2.15 g/cm³ or more. In consideration of the impregnation of the positive electrode mixture with the electrolyte inside the battery, the BET specific surface area is preferably in the range of 5 to 20 m²/g.

The foregoing examples used nickel oxyhydroxides including manganese alone, but the use of nickel oxyhydroxides including manganese and a smaller amount of another element than manganese, such as zinc or cobalt, can produce essentially the same results.
Also, the foregoing examples used graphite as the conductive agent, but the use of one of various carbon blacks and fibrous carbon alone or in combination with graphite as the conductive agent can produce the essential effects of the present invention.

Further, the present invention is applicable to batteries of other structures, such as alkaline button or rectangular type, than the so-called inside-out type alkaline battery as produced in the foregoing examples in which the tubular positive electrode mixture pellets, the separator, the gel negative electrode, etc., are placed in the cylindrical positive electrode case.

### Industrial Applicability

The present invention can provide an alkaline battery having high capacity and improved storage characteristics. Such an alkaline battery can be used, for example, as the power source for portable electronic devices.

## Claims

1. An alkaline battery comprising a positive electrode mixture, a negative electrode, and a separator interposed between said positive electrode mixture and said negative electrode,
said positive electrode mixture including a nickel oxyhydroxide, manganese dioxide and a conductive agent,
wherein
(1) said nickel oxyhydroxide includes at least manganese dissolved therein, and said manganese accounts for 0.5 to 10 % by mole of the total amount of metal elements contained in said nickel oxyhydroxide,
(2) said nickel oxyhydroxide mainly has a β-type crystal structure, and
(3) said nickel oxyhydroxide has a volume-basis mean particle size of 8 to 15 µm.

2. The alkaline battery in accordance with claim 1, wherein said nickel oxyhydroxide has at least one of the physical properties of:
(4) a nickel mean valence of 2.95 to 3.05;
(5) a tap density of 2.15 g/cm³ or more; and
(6) a BET specific surface area of 5 to 20 m²/g.

3. The alkaline battery in accordance with claim 1, wherein said nickel oxyhydroxide has sodium ions on the surface thereof, and said sodium ions account for 0.5 to 1 % by weight of the total of said nickel oxyhydroxide and said sodium ions.

4. The alkaline battery in accordance with claim 1, wherein said nickel oxyhydroxide accounts for 10 to 80 % by weight of said positive electrode mixture.

5. The alkaline battery in accordance with claim 1, wherein said conductive agent is graphite, and said graphite accounts for 3 to 10 % by weight of said positive electrode mixture.
